# EUROPÄISCHE PATENTSCHRIFT

(11) **EP 2 535 737 B1**
(45) Veröffentlichungstag und Bekanntmachung des Hinweises auf die Patenterteilung: **09.07.2014**
(21) Anmeldenummer: 12004514.1
(22) Anmeldetag: 15.06.2012
(51) Int. Cl.: G01S 19/21, G01S 19/03

(54) **Verfahren und System zum Ermitteln der Position eines in einem Kraftfahrzeug angeordneten GNSS-Empfängers**
Method and system for determining the position of a GNSS receiver in a motor vehicle
Procédé et système de détection de la position d'un récepteur GNSS installé dans un véhicule automobile

(30) Priorität: 16.06.2011 DE 102011106591
(43) Veröffentlichungstag der Anmeldung: 19.12.2012
(73) Patentinhaber: Astrium GmbH, 82024 Taufkirchen (DE)
(72) Erfinder: Wendel, Jan, Dr., 81373 München (DE); Kogler, Wolfgang, Dr., 85521 Ottobrunn (DE)
(74) Vertreter: Avenhaus, Beate

(56) Entgegenhaltungen:
- DE-A1-102009 057 550
- US-A1- 2008 316 042
- HENGQING WEN ET AL: "Countermeasures for GPS Signal Spoofing", PROCEEDINGS OF ION GPS/GNSS, XX, XX, Nr. 18th, 13. September 2005 (2005-09-13), Seiten 1285-1390, XP007903714,

## Beschreibung

Die Erfindung betrifft ein Verfahren zum Ermitteln der Position eines in einem Kraftfahrzeug angeordneten GNSS-Empfängers, dessen bestimmungsgemäße Funktion von einer Störquelle in einem Kraftfahrzeug gezielt beeinträchtigt ist, mittels eines Sensornetzwerks, das ein oder mehrere Sensoren zur Störquellendetektion an vorgegebenen Verkehrswegepunkten umfasst. Die Erfindung betrifft weiterhin ein solches System zum Ermitteln der Position eines in einem Kraftfahrzeug angeordneten GNSS-Empfängers, dessen bestimmungsgemäße Funktion von einer Störquelle in einem Kraftfahrzeug gezielt beeinträchtigt ist.

GNSS(Globales Navigationssatellitensystem bzw. Global Navigation Satellite System)-Empfänger ermitteln aus den von einer Mehrzahl von Satelliten ausgesendeten GNSS-Signalen ihre Position. Solche GNSS-Empfänger werden unter anderem in Kraftfahrzeugen eingesetzt. Diese dienen dazu, im Falle eines Diebstahls ihre gegenwärtige Position an den Besitzer, den Hersteller des Fahrzeugs oder einen Dienstleister zu übermitteln, um das Auffinden des Fahrzeugs zu ermöglichen. Von einem GNSS-Empfänger ermittelte Positionsdaten werden weiterhin dazu verwendet, eine Information über die von dem Kraftfahrzeug befahrenen Straßen zu erhalten. Auf Basis dieser Informationen kann dann eine fällige Straßenbenutzungsgebühr errechnet und dem Fahrer bzw. Halter des Kraftfahrzeugs in Rechnung gestellt werden.

Mittels in dem Kraftfahrzeug angeordneten Störquellen kann der Betrieb von GNSS-Empfängern gezielt beeinträchtigt werden. Störquellen sind bspw. Störsender (sog. Jammer), welche die Erfassung und das Auswerten/Nutzen von Satelliten ausgesendeten GNSS-Signalen und damit die Positionsbestimmung durch den GNSS-Empfänger unterbindet. Damit kann bspw. die oben beschriebene Diebstahlfunktionalität wirksam außer Kraft gesetzt werden. Als Störquellen sind auch sog. Spoofer bekannt, welche dem GNSS-Empfänger ein von einem Satelliten ausgesendetes GNSS-Signal vortäuschen. Dieses wird dann von dem GNSS-Empfänger zur Ermittlung einer Positionslösung verwendet, welche dann allerdings nicht der realen Position entspricht.

Die US 2008/0316042 A1 offenbart ein Verfahren und eine Vorrichtung zum Ermitteln der Position eines in einem Fahrzeug anordenbaren Daten-Loggers. Dieser umfasst neben Mitteln zur Positionsbestimmung eine Kommunikationseinheit, welche Identifikationsdaten eines entfernten Verbindungspunkts im Rahmen einer Kommunikation empfängt und die Identifikationsdaten dem geographischen Standort des Daten-Loggers zuordnet.

Die DE 10 2009 057 550 A1 beschreibt ein Verfahren zur Signalisierung einer unberechtigten Nutzung eines Kraftfahrzeugs in Abhängigkeit davon, ob sich das Kraftfahrzeug im Störbereich eines Mobilfunkstörsenders befindet. Ein Signal, das eine unberechtigte Nutzung des Kraftfahrzeugs signalisiert, wird dann ausgegeben wird, wenn sich das Kraftfahrzeug zu einem ersten Zeitpunkt in dem Störbereich befindet, eine Bewegung des Fahrzeugs festgestellt wird und ein Maß für die Entfernung der Orte, an denen sich das Kraftfahrzeug zum ersten Zeitpunkt befand und zum aktuellen Zeitpunkt befindet, größer als ein vorbestimmter Schwellenwert ist und sich das Fahrzeug zu dem aktuellen Zeitpunkt im Bereich des Mobilfunkstörsenders befindet.

Der Artikel "Countermeasures for GPS Signal Spoofing" von Hengqing Wen et. al. Proceedings of ION GPS/GNSS, Nr. 18th, 13. September 2005, Seiten 1285-1290 beschreibt Maßnahmen gegen das Spoofing von GPS-Signalen.

Es ist Aufgabe der vorliegenden Erfindung, ein Verfahren und ein System anzugeben, mit dem die Ermittlung der Position eines in einem Kraftfahrzeug angeordneten GNSS-Empfängers auch dann ermöglicht wird, wenn dessen bestimmungsgemäße Funktion von einer Störquelle in dem Kraftfahrzeug gezielt beeinträchtigt ist.

Diese Aufgaben werden gelöst durch ein Verfahren gemäß den Merkmalen des Patentanspruches 1 und ein System gemäß den Merkmalen des Patentanspruches 10. Vorteilhafte Ausgestaltungen ergeben sich aus den abhängigen Patentansprüchen.

Die Erfindung schafft ein Verfahren zum Ermitteln der Position eines in einem Kraftfahrzeug angeordneten GNSS-Empfängers, dessen bestimmungsgemäße Funktion von einer Störquelle in dem Kraftfahrzeug gezielt beeinträchtigt ist, mittels eines Sensornetzwerks, welches eine jeweilige Sensoreinheit zur Störquellendetektion an vorgegebenen Verkehrswegepunkten umfasst. Unter einer Störquelle werden im Rahmen der vorliegenden Offenbarung sowohl Störsender (Jammer) als auch Spoofer verstanden. Jammer unterbinden die Erfassung und das Verarbeiten/Nutzens eines von Satelliten ausgesendeten GNSS-Signals und damit die Positionsbestimmung durch den in dem Kraftfahrzeug angeordneten GNSS-Empfänger. Spoofer senden ein falsches GNSS-Signal aus, wobei dieses durch den in dem Kraftfahrzeug angeordneten GNSS-Empfänger als ein reguläres von einem Satelliten gesendetes GNSS-Signal interpretiert wird. Hierdurch ermittelt der GNSS-Empfänger eine falsche Positionslösung.

Bei dem erfindungsgemäßen Verfahren werden beim Passieren des Kraftfahrzeugs eines der Verkehrswegepunkte durch den oder die Sensoren des Verkehrswegepunkts ein von der Störquelle abgegebenes Störsignal und/oder ein von der Störquelle beeinträchtigtes Empfangssignal des GNSS-Empfängers detektiert. Anschließend werden die detektierten Signale verarbeitet, um das Vorhandensein der Störquelle in dem Kraftfahrzeug festzustellen. Beim Vorhandensein der Störquelle wird eine Information erzeugt, welche zumindest den Ort des Verkehrswegepunkts und die Störquelle in dem Kraftfahrzeug signalisiert, wobei aus dem Ort des Verkehrswegepunkts die Position des Kraftfahrzeugs ermittelt wird.

Die Erfindung schafft weiter ein System zum Ermitteln der Position eines in einem Kraftfahrzeug angeordneten GNSS-Empfängers, dessen bestimmungsgemäße Funktion von einer Störquelle in dem Kraftfahrzeug gezielt beeinträchtigt ist. Bei dem System sind eine jeweilige Sensoreinheit an vorgegebenen Verkehrswegepunkten angeordnet, wobei die Sensoren dazu ausgebildet sind, beim Passieren des Kraftfahrzeugs eines der Verkehrswegepunkte ein von der Störquelle abgegebenes Störsignal und/oder ein von der Störquelle beeinträchtigtes Empfangssignal des GNSS-Empfängers zu detektieren. Es ist weiter eine Recheneinheit vorgesehen zur Bearbeitung der detektierten Signale, um das Vorhandensein der Störquelle in dem Kraftfahrzeug festzustellen. Beim Vorhandensein der Störquelle ist durch das System eine Information erzeugbar, welche zumindest den Ort des Verkehrswegepunkts und die Störquelle in dem Kraftfahrzeug signalisiert, wobei aus dem Ort des Verkehrswegepunkts die Position des Kraftfahrzeugs ermittelbar ist.

Unter einem Störsignal wird jede Art von Signal verstanden, das von der Störquelle abgegeben wird. Es kann sich somit um ein Signal handeln, das den Empfang regulärer GNSS-Signale von Satelliten unterbindet oder ein GNSS-Signal vortäuscht.

Durch das erfindungsgemäße Vorgehen wird die Position des Kraftfahrzeugs bzw. des darin angeordneten GNSS-Empfängers somit auf indirekte Weise ermittelt. Die Positionsbestimmung erfolgt nicht unmittelbar durch eine durch den GNSS-Empfänger ermittelte Position. Vielmehr werden die dem GNSS-Empfänger zugeordneten Störquellen, die die Funktion des GNSS-Empfängers beeinträchtigen, ermittelt, um aus dem Ort der Störquellendetektion die Position des GNSS-Empfängers und damit des Kraftfahrzeugs zu ermitteln. Es ist damit nicht nur möglich, eine Manipulation der Funktionsfähigkeit des GNSS-Empfängers aufzuspüren. Vielmehr kann damit die eigentliche Funktionalität des GNSS-Empfängers (Diebstahlschutz oder Wegbestimmung) zumindest teilweise wieder hergestellt werden.

Im Falle der Verwendung des GNSS-Empfängers als Diebstahlschutz für das Kraftfahrzeug, kann die Position des Kraftfahrzeugs durch die Detektion der Störquellen an dem betreffenden Verkehrswegepunkt detektiert werden. Passiert das Kraftfahrzeug eine Mehrzahl solcher Verkehrswegepunkte, so kann ein Bewegungsprofil ermittelt werden. Wird andererseits an den Verkehrswegepunkten die Störquelle deaktiviert, um die Manipulation zu vertuschen, so ist der GNSS-Empfänger wiederum in der Lage, seine aktuelle Position an ein übergeordnetes System zu übermitteln, so dass die Position des Kraftfahrzeugs ebenfalls ermittelt werden kann. Dient der GNSS-Empfänger zur Ermittlung der von dem Kraftfahrzeug benutzten Verkehrswege, so kann - ein entsprechendes Sensornetzwerk mit Sensoreinheiten an vorgegebenen Verkehrswegepunkten vorausgesetzt - auch ohne "aktiven" GNSS-Empfänger die von dem Kraftfahrzeug zurückgelegte Wegstrecke ermittelt werden.

In einer bevorzugten Ausgestaltung wird zur Ermittlung des Vorhandenseins eines Störsenders durch den Verkehrswegepunkt ein Spectrum Monitoring-Verfahren durchgeführt. Alternativ oder zusätzlich kann zur Ermittlung des Vorhandenseins eines Störsenders durch den Verkehrswegepunkt die Performanz eines Referenz-GNSS-Empfängers und seiner Parameter in Bezug auf Erfassung und Nachführung eines GNSS-Signals ermittelt werden. Die beiden entweder alternativ oder zusammen durchgeführten Verfahren ermöglichen es, Störsender zu detektieren. Der Referenz-GNSS-Empfänger ist hierzu bevorzugt in den Verkehrswegepunkt angeordnet.

Zur Ermittlung des Vorhandenseins eines Spoofers werden bevorzugt durch den Verkehrswegepunkt Korrelationseigenschaften eines von dem Spoofer ausgesendeten GNSS-Signals und des von zumindest einem Satelliten ausgesendeten GNSS-Signals ermittelt. Alternativ oder zusätzlich können zur Ermittlung des Vorhandenseins eines Spoofers durch den Verkehrswegepunkt auch Empfangsstärken des von dem Spoofer ausgesendeten GNSS-Signals und des von zumindest einem Satelliten ausgesendeten GNSS-Signals ermittelt werden.

Es ist weiterhin bevorzugt, wenn als Verkehrswegepunkt zur Anordnung der Sensoreinheiten einer oder mehrere der folgenden Punkte ausgewählt werden: Grenzübergänge, Einrichtungen zur Erfassung von Straßenbenutzungsgebühren, Ein- und/oder Ausgänge von abgegrenzten Gebieten, insbesondere Parkplätze und/oder -häuser, Schnellstraßenauf- und/oder -abfahrten, Autobahnauf- und/oder -abfahrten, Straßenkreuzungen, Häfen, Bahnhöfe. Es versteht sich, dass neben den genannten Verkehrswegepunkten auch andere Verkehrswegepunkte mit Sensoreinheiten zur Störquellendetektion versehen werden können. Je größer die Anzahl an Verkehrswegepunkten mit Sensoreinheiten zur Störquellendetektion, desto zuverlässiger können die üblicherweise rechtswidrig verwendeten Störquellen detektiert werden.

In einer weiter bevorzugten Ausgestaltung umfasst die von den Verkehrswegepunkten erzeugte Information zusätzlich die Zeit der Detektion der Störquelle. Durch die Kombination der Zeit der Detektion der Störquelle mit dem Ort des Verkehrswegepunkts kann eine präzise Information über den Aufenthaltsort des Kraftfahrzeugs ermittelt werden. Insbesondere ist die Kombination von Zeit und Ort dann hilfreich, wenn das Kraftfahrzeug mit aktivierter Störquelle eine Vielzahl an Verkehrswegepunkten passiert hat. In diesem Fall ist die Ermittlung eines Verkehrswegeprofils möglich.

In einer weiteren zweckmäßigen Ausgestaltung wird durch den Verkehrswegepunkt eine das Kraftfahrzeug identifizierende Fahrzeug-Information ermittelt, welche als Bestandteil in die von dem Verkehrswegepunkt erzeugte Information integriert wird. Eine solche Fahrzeug-Information kann bspw. ein Foto oder eine Videoaufnahme sein, welche das Kennzeichen des Kraftfahrzeugs und gegebenenfalls den Fahrer des Kraftfahrzeugs identifiziert. Die Ausgestaltung kann genutzt werden, wenn ein unmittelbares Eingreifen gegen die unrechtmäßige Nutzung der Störquelle nicht erforderlich oder möglich ist. Dies könnte bspw. bei der Erhebung von Straßenbenutzungsgebühren der Fall sein.

Es ist weiterhin bevorzugt, wenn die von dem Verkehrswegepunkt erzeugte Information an eine zentrale Stelle übertragen wird. Durch diese können bspw. Rechtsverstöße verfolgt werden. Die zentrale Stelle könnte jedoch auch ein Dienstleister sein, welcher anhand einer Positionsbestimmung des Fahrzeugs gestohlene Fahrzeuge wieder aufspürt.

Die Erfindung wird nachfolgend näher anhand eines Ausführungsbeispiels in der Zeichnung erläutert. Es zeigen:
- Fig. 1: eine schematische Darstellung eines erfindungsgemäßen Systems zum Ermitteln der Position eines in einem Kraftfahrzeug angeordneten GNSS-Empfängers, dessen bestimmungsgemäße Funktion von einer Störquelle in dem Kraftfahrzeug gezielt beeinträchtigt ist, und
- Fig. 2: den Ablauf des erfindungsgemäßen Verfahrens.

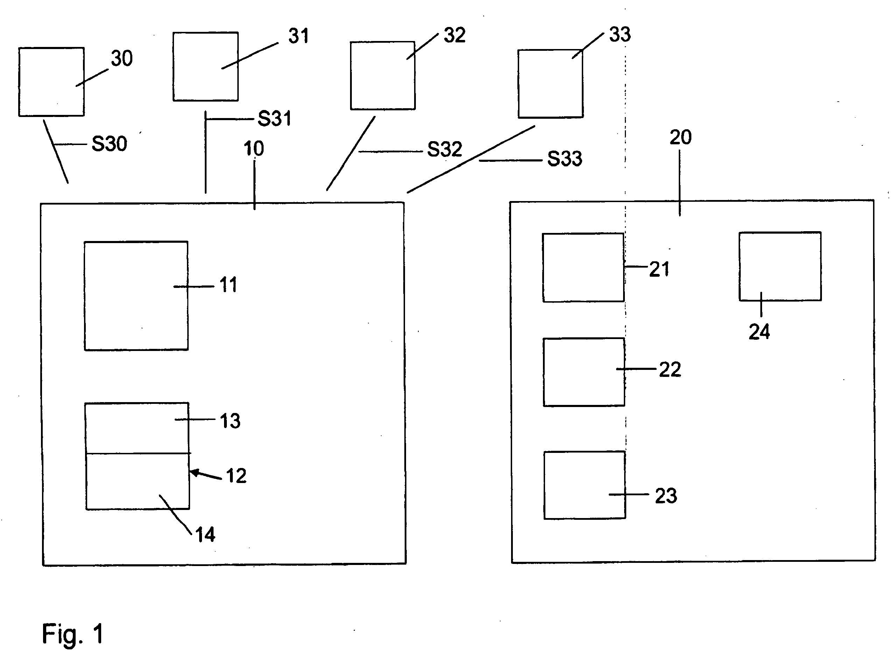

Fig. 1 zeigt in einer schematischen Darstellung ein Kraftfahrzeug 10, in dem ein GNSS-Empfänger 11 angeordnet ist. Der GNSS-Empfänger 11 empfängt GNSS-Signale S30, S31, S32, S33 von beispielhaft vier dargestellten Satelliten 30, 31, 32, 33. Aus diesen GNSS-Signalen S30, S31, S32, S33 ist der GNSS-Empfänger 11 in der Lage, seine Position und damit die Position des Kraftfahrzeugs zu ermitteln. Die Position des Kraftfahrzeugs kann wahlweise innerhalb des Kraftfahrzeugs oder von einer zentralen Instanz außerhalb des Kraftfahrzeugs verarbeitet werden. Die in Fig. 1 nicht dargestellte zentrale Instanz empfängt hierzu die Positionsdaten des Kraftfahrzeugs in regelmäßigen oder unregelmäßigen Abständen, bspw. über eine ebenfalls nicht dargestellte kontaktlose Kommunikationsschnittstelle.

Die Positionsinformation des GNSS-Empfängers 11 und damit des Kraftfahrzeugs 10 kann bspw. dazu verwendet werden, die von dem Kraftfahrzeug benutzte Wegstrecke zu ermitteln. Hierauf basierend kann eine ggf. anfallende Straßenbenutzungsgebühr ermittelt und errechnet werden, welche dem Nutzer oder Halter des Kraftfahrzeugs dann in Rechnung gestellt wird.

Die Positionsinformation des GNSS-Empfängers 11 kann bspw. auch dazu verwendet werden, die Position des Kraftfahrzeugs im Falle eines Diebstahls aufzuspüren. Hierzu wird die von dem GNSS-Empfänger ermittelte Position an die zentrale Instanz übertragen, welche den Aufenthaltsort des Kraftfahrzeugs ermittelt und entsprechende Maßnahmen zum Rückholen des Kraftfahrzeugs ergreifen kann.

Die Funktionsfähigkeit des GNSS-Empfängers kann durch eine in das Fahrzeug 10 dauerhaft oder temporär eingebrachte Störquelle 12 beeinträchtigt werden. Als Störquellen 12 kommen Störsender, sog. Jammer, oder Spoofer in Betracht. Die in Fig. 1 dargestellte Störquelle 12 umfasst beispielhaft sowohl einen Jammer 13 als auch einen Spoofer 14. Durch den Störsender bzw. Jammer 13 kann die Erfassung und das Nachführen der von den Satelliten 30, 31, 32, 33 ausgesendeten GNSS-Signale S30, S31, S32, S33 unterbunden werden. Hierdurch kann durch den GNSS-Empfänger 11 keine Positionsbestimmung mehr vorgenommen werden.

Der Spoofer 14 sendet ein durch den GNSS-Empfänger 11 detektierbares Signal aus, welches durch den GNSS-Empfänger 11 als GNSS-Signal eines Satelliten interpretiert wird. Da das von dem Spoofer ausgesendete Signal ähnliche Korrelationseigneschaften aufweist wie das von einem Satelliten empfangene GNSS-Signal S30, S31, S32, S33 verwendet der GNSS-Empfänger 11 unter Umständen dieses zur Positionsbestimmung. Aufgrund dieses manipulierten Signals kann der GNSS-Empfänger hieraus jedoch keine korrekte Positionslösung ermitteln.

Die Erfindung sieht deshalb vor, an einer Vielzahl von Verkehrswegepunkten 20 Sensoreinheiten 21 zur Störquellendetektion anzuordnen. Die Sensoreinheiten einer Mehrzahl an Verkehrswegepunkte bilden ein Sensornetzwerk. In Fig. 1 ist beispielhaft lediglich ein einziger Verkehrswegepunkt 20 dargestellt. Der Verkehrswegepunkt 20 umfasst eine Sensoreinheit 21, eine Kamera 22, eine Verarbeitungseinheit 23 sowie einen Referenz-GNSS-Empfänger 24. Die Sensoreinheit 21 umfasst einen oder mehrere Sensoren zur Detektion einer in einem Kraftfahrzeug installierten Störquelle. Die Sensoreinheit 21 umfasst bspw. entsprechende Antennen zur Signalermittlung.

Jammer in einem Kraftfahrzeug können dadurch erkannt werden, dass durch die Sensoreinheit 21 des Verkehrswegepunkts 20 ein Spectrum Monitoring-Verfahren durchgeführt wird. Alternativ oder zusätzlich kann zur Detektion eines Jammers durch den Verkehrswegepunkt 20 die Performanz des Referenz-GNSS-Empfängers 24 und seiner Parameter in Bezug auf Erfassung und Nachführung eines GNSS-Signals ermittelt werden. Entsprechende Verfahren sind dem Fachmann bekannt und werden daher an dieser Stelle nicht näher erläutert.

Zur Detektion eines Spoofers werden durch den Verkehrswegepunkt 20 Korrelationseigenschaften eines von dem Spoofer aus gesendeten GNSS-Signals und des von zumindest einem der Satelliten 30, 31, 32, 33 ausgesendeten GNSS-Signals S30, S31, S32, S33 ermittelt. Alternativ oder zusätzlich können die Empfangsstärken des von dem Spoofer aus gesendeten GNSS-Signals und des von zumindest einem der Satelliten 30, 31, 32, 33 ausgesendeten GNSS-Signals S30, S31, S32, S33 ermittelt werden. Die hierzu notwendigen Mittel und Verfahren zum Erkennen eines Spoofers sind dem Fachmann aus dem Stand der Technik ebenfalls bekannt, so dass diese an dieser Stelle auch nicht weiter ausgeführt werden.

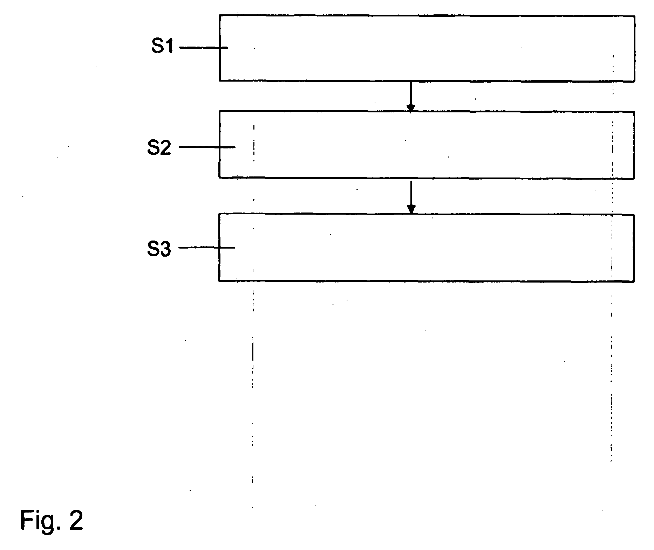

Das erfindungsgemäße Verfahren, das schematisch in Fig. 2 dargestellt ist, basiert nun darauf, dass in einem Schritt S1 beim Passieren des Kraftfahrzeugs 10 des Verkehrswegepunkts 20 durch dessen Sensoreinheit 21 ein von der Störquelle 12 abgegebenes Störsignal und/oder ein von der Störquelle beeinträchtigtes Empfangssignal des GNSS-Empfängers S30, S31, S32, S33 detektiert wird. Diese detektierten Signale werden in einem Schritt S2 verarbeitet, um das Vorhandensein der Störquelle in dem Kraftfahrzeug festzustellen. Wurde eine Störquelle detektiert, so wird durch die Verarbeitungseinheit 23 des Verkehrswegepunkts 20 in Schritt S3 eine Information erzeugt, welche den Ort des Verkehrswegepunkts, die in dem Kraftfahrzeug befindliche Störquelle (Jammer oder Spoofer) und optional die Zeit des Passierens des Verkehrswegepunkts umfasst. Hierdurch kann anhand des Orts des Verkehrswegepunkts die Position des Kraftfahrzeugs 10 ermittelt werden. Wahlweise kann die Information auch eine Bildinformation des den Verkehrswegepunkt 20 passierenden Kraftfahrzeug 10 und optional dessen Fahrer umfassen. Hierdurch kann die Verwendung eines in der Regel unrechtmäßig eingesetzten Störsenders auch zeitlich unabhängig vom Passieren des Verkehrswegepunkts vorgenommen werden.

Je größer die Anzahl an mit Sensoren zur Störquellendetektion ausgestatteten Verkehrswegepunkten ist, desto präziser kann der Weg eines Kraftfahrzeugs verfolgt werden. Bevorzugt wird die von einen jeweiligen Verkehrswegepunkt 20 erzeugte Information an eine zentrale Stelle zur weiteren Verarbeitung übertragen.

Als Verkehrswegepunkt 20 der oben beschriebenen Art können bspw. Grenzübergänge, Einrichtungen zur Erfassung von Straßenbenutzungsgebühren, Ein- und/oder Ausgänge von abgegrenzten Gebieten, insbesondere Parkplätze und/oder -häuser, Schnellstraßenauf- und/oder -abfahrten, Autobahnauf- und/oder -abfahrten, Straßenkreuzungen, Häfen, Bahnhöfe usw. gewählt werden.

Das beschriebene Vorgehen unterstützt bspw. das Aufspüren und Widerbeschaffen gestohlener Kraftfahrzeuge. Das Abschalten der Störquelle 12 beim Passieren eines Verkehrswegepunkts 20 führt dazu, dass während der deaktivierten Störquelle 12 der GNSS-Empfänger 11 der Kraftfahrzeuge 10 seine Position bestimmen und an einen Dienstleister zum Aufspüren des Kraftfahrzeugs übertragen kann.

Benutzer von Störquellen, welche die Bezahlung von Straßengebühren unterschlagen wollen, können bei entsprechend engmaschigen erfindungsgemäß ausgestalteten Verkehrswegepunkten ausfindig gemacht werden, wobei unter Umständen auch die zurückgelegte Wegstrecke rekonstruierbar ist.

### Bezugszeichenliste

- 10: Kraftfahrzeug
- 11: GNSS-Empfänger
- 12: Störquelle
- 13: Störsender
- 14: Spoofer

- 20: Verkehrswegepunkt
- 21: Sensoreinheit
- 22: Kamera
- 23: Verarbeitungseinheit
- 24: Referenz-GNSS-Empfänger

- 30: Satellit
- 31: Satellit
- 32: Satellit
- 33: Satellit

- S1: Schritt
- S2: Schritt
- S3: Schritt

## Patentansprüche

1. Verfahren zum Ermitteln der Position eines in einem Kraftfahrzeug (10) angeordneten GNSS-Empfängers (11), dessen bestimmungsgemäße Funktion von einer Störquelle (12) in dem Kraftfahrzeug (10) gezielt beeinträchtigt ist, mittels eines Sensornetzwerks, das eine jeweilige Sensoreinheit (21) zur Störquellendetektion an vorgegebenen Verkehrswegepunkten (20) umfasst, bei dem:
- beim Passieren des Kraftfahrzeugs eines der Verkehrswegepunkte durch die Sensoreinheit (21) des Verkehrswegepunkts (20) ein von der Störquelle (12) abgegebenes Störsignal und/oder ein von einem GNSS-Satelliten (30) ausgesendetes und von der Störquelle (12) beeinträchtigtes Empfangssignal (S30) des GNSS-Empfängers detektiert werden;
- die detektierten Signale verarbeitet werden, um das Vorhandensein der Störquelle (12) in dem Kraftfahrzeug (10) festzustellen; und
- beim Vorhandensein der Störquelle (12) eine Information erzeugt wird, welche zumindest den Ort des Verkehrswegepunkts (20) und die Störquelle (12) in dem Kraftfahrzeug (10) signalisiert, wobei aus dem Ort des Verkehrswegepunkts (20) die Position des Kraftfahrzeugs (10) ermittelt wird.

2. Verfahren nach Anspruch 1, bei dem zur Ermittlung des Vorhandenseins eines Störsenders (13) der Störquelle (12) durch den Verkehrswegepunkt (20) ein Spectrum Monitoring-Verfahren durchgeführt wird.

3. Verfahren nach Anspruch 1 oder 2, bei dem zur Ermittlung des Vorhandenseins eines Störsenders (13) der Störquelle (12) durch den Verkehrswegepunkt (20) die Performanz eines Referenz-GNSS-Empfängers und seiner Parameter in Bezug auf Erfassung und Nachführung eines GNSS-Signals ermittelt wird.

4. Verfahren nach einem der vorhergehenden Ansprüche, bei dem zur Ermittlung des Vorhandenseins eines Spoofers (14) der Störquelle (12) durch den Verkehrswegepunkt (20) Korrelationseigenschaften eines von dem Spoofer (14) ausgesendeten GNSS-Signals und des von zumindest einem Satelliten ausgesendeten GNSS-Signals ermittelt werden.

5. Verfahren nach einem der vorhergehenden Ansprüche, bei dem zur Ermittlung des Vorhandenseins eines Spoofers (14) der Störquelle (12) durch den Verkehrswegepunkt (20) Empfangsstärken des von dem Spoofer (14) ausgesendeten GNSS-Signals und des von zumindest einem Satelliten ausgesendeten GNSS-Signals ermittelt werden.

6. Verfahren nach einem der vorhergehenden Ansprüche, bei dem als Verkehrswegepunkt (20) zur Anordnung der Sensoreinheit (21) einer oder mehrere der folgenden Punkte ausgewählt werden: Grenzübergänge, Einrichtungen zur Erfassung von Straßenbenutzungsgebühren, Ein- und/oder Ausgänge von abgegrenzten Gebieten, insbesondere Parkplätze und/oder - häuser, Schnellstraßenauf- und/oder -abfahrten, Autobahnauf- und/oder - abfahrten, Straßenkreuzungen, Häfen, Bahnhöfe.

7. Verfahren nach einem der vorhergehenden Ansprüche, bei dem die von dem Verkehrswegepunkt (20) erzeugte Information zusätzlich die Zeit der Detektion der Störquelle (12) umfasst.

8. Verfahren nach einem der vorhergehenden Ansprüche, bei dem durch den Verkehrswegepunkt (20) eine das Kraftfahrzeug (10) identifizierende Fahrzeug-Information ermittelt wird, welche als Bestandteil in die von dem Verkehrswegepunkt (20) erzeugte Information integriert wird.

9. Verfahren nach einem der vorhergehenden Ansprüche, bei dem die von dem Verkehrswegepunkt (20) erzeugte Information an eine zentrale Stelle übertragen wird.

10. System zum Ermitteln der Position eines in einem Kraftfahrzeug (10) angeordneten GNSS-Empfängers (11), dessen bestimmungsgemäße Funktion von einer Störquelle (12) in dem Kraftfahrzeug (10) gezielt beeinträchtigt ist, bei dem
- eine jeweilige Sensoreinheit (21) an vorgegebenen Verkehrswegepunkten (20) angeordnet sind, wobei die Sensoreinheit (21) dazu ausgebildet sind, beim Passieren des Kraftfahrzeugs (10) eines der Verkehrswegepunkte ein von der Störquelle (12) abgegebenes Störsignal und/oder ein von einem GNSS-Satelliten (30) ausgesendetes und von der Störquelle (12) beeinträchtigtes Empfangssignal (S30) des GNSS-Empfängers (11) zu detektieren;
- eine Recheneinheit vorgesehen ist zur Verarbeitung der detektierten Signale, um das Vorhandensein der Störquelle (12) in dem Kraftfahrzeug (10) festzustellen; und
- beim Vorhandensein der Störquelle (12) eine Information erzeugbar ist, welche zumindest den Ort des Verkehrswegepunkts (20) und die Störquelle (12) in dem Kraftfahrzeug (10) signalisiert, wobei aus dem Ort des Verkehrswegepunkts (20) die Position des Kraftfahrzeugs (10) ermittelbar ist.

11. System nach Anspruch 10, das weitere Mittel zur Durchführung des Verfahrens nach einem der Ansprüche 2 bis 9 umfasst.

## Claims

1. Method for ascertaining the position of a GNSS receiver (11) that is arranged in a motor vehicle (10) and the intended operation of which is subject to targeted impairment by an interference source (12) in the motor vehicle (10) using a sensor network that comprises a respective sensor unit (21) for interference source detection at prescribed traffic route points (20), in which:
- when the motor vehicle passes through one of the traffic route points the sensor unit (21) of the traffic route point (20) detects an interference signal emitted by the interference source (12) and/or a received signal (S30), emitted by a GNSS satellite (30) and impaired by the interference source (12), from the GNSS receiver;
- the detected signals are processed in order to establish the presence of the interference source (12) in the motor vehicle (10); and
- if the interference source (12) is present then a piece of information is produced that signals at least the location of the traffic route point (20) and the interference source (12) in the motor vehicle (10), wherein the position of the motor vehicle (10) is ascertained from the location of the traffic route point (20).

2. Method according to Claim 1, in which the presence of a jamming transmitter (13) for the interference source (12) is ascertained by virtue of the traffic route point (20) carrying out a spectrum monitoring method.

3. Method according to Claim 1 or 2, in which the presence of a jamming transmitter (13) for the interference source (12) is ascertained by virtue of the traffic route point (20) ascertaining the performance of a reference GNSS receiver and the parameters thereof in relation to capture and tracking of a GNSS signal.

4. Method according to one of the preceding claims, in which the presence of a spoofer (14) for the interference source (12) is ascertained by virtue of the traffic route point (20) ascertaining correlation properties of a GNSS signal emitted by the spoofer (14) and of the GNSS signal emitted by at least one satellite.

5. Method according to one of the preceding claims, in which the presence of a spoofer (14) for the interference source (12) is ascertained by virtue of the traffic route point (20) ascertaining reception strengths of the GNSS signal emitted by the spoofer (14) and of the GNSS signal emitted by at least one satellite.

6. Method according to one of the preceding claims, in which the traffic route point (20) selected for the arrangement of the sensor unit (21) is one or more of the following points: border crossings, facilities for recording road use charges, entrances and/or exits to/from delimited areas, particularly car parks and/or multi-storey car parks, fast-road entry and/or exit slip roads, motorway entry and/or exit slip roads, road junctions, ports, railway stations.

7. Method according to one of the preceding claims, in which the information produced by the traffic route point (20) additionally comprises the time of detection of the interference source (12).

8. Method according to one of the preceding claims, in which the traffic route point (20) ascertains a piece of vehicle information that identifies the motor vehicle (10), said information being integrated as a component part into the information produced by the traffic route point (20).

9. Method according to one of the preceding claims, in which the information produced by the traffic route point (20) is transmitted to a central office.

10. System for ascertaining the position of a GNSS receiver (11) that is arranged in a motor vehicle (10) and the intended operation of which is subject to targeted impairment by an interference source (12) in the motor vehicle (10), in which
- a respective sensor unit (21) is arranged at prescribed traffic route points (20), wherein the sensor unit (21) is designed so that when the motor vehicle (10) passes through one of the traffic route points it detects an interference signal emitted by the interference source (12) and/or a received signal (S30), emitted by a GNSS satellite (30) and impaired by the interference source (12), from the GNSS receiver (11);
- a computation unit is provided for processing the detected signals in order to establish the presence of the interference source (12) in the motor vehicle (10); and
- if the interference source (12) is present then a piece of information can be produced that signals at least the location of the traffic route point (20) and the interference source (12) in the motor vehicle (10), wherein the position of the motor vehicle (10) can be ascertained from the location of the traffic route point (20).

11. System according to Claim 10 that comprises further means for carrying out the method according to one of Claims 2 to 9.

## Revendications

1. Procédé de détection, à l'aide d'un réseau sensoriel, de la position d'un récepteur GNSS (11) installé dans un véhicule automobile (10) dont le fonctionnement normal est perturbé intentionnellement par une source d'interférence (12) placée dans le véhicule automobile (10), comprenant une unité de détection (21) respective servant à la détection de source d'interférence en des points de voirie (20) prédéfinis, dans lequel :
- lors du passage du véhicule automobile par un des points de voirie, un signal d'interférence émis par la source d'interférence (12) et/ou un signal de réception (530) du récepteur GNSS émis par un satellite GNSS (30) et perturbé par la source d'interférence (12) sont détectés par l'unité de détection (21) du point de voirie (20) ;
- les signaux détectés sont traités pour établir la présence de la source d'interférence (12) dans le véhicule automobile (10) ; et
- en présence de la source d'interférence (12), une information est produite signalant au moins l'emplacement du point de voirie (20) et la source d'interférence (12) placée dans le véhicule automobile (10), la position du véhicule automobile (10) étant déterminée à partir de l'emplacement du point de voirie (20).

2. Procédé selon la revendication 1, dans lequel un procédé de surveillance de spectre est mis en oeuvre pour déterminer la présence d'un émetteur d'interférence (13) de la source d'interférence (12) au point de voirie (20).

3. Procédé selon la revendication 1 ou 2, dans lequel la performance d'un récepteur GNSS de référence et de ses paramètres par rapport à la détection et à la transmission d'un signal GNSS est calculée pour déterminer la présence d'un émetteur d'interférence (13) de la source d'interférence (12) au point de voirie (20).

4. Procédé selon l'une quelconque des revendications précédentes, dans lequel des propriétés de corrélation d'un signal GNSS émis par le brouilleur (14) et du signal GNSS émis par au moins un satellite sont déterminées pour déterminer la présence d'un brouilleur (14) de la source d'interférence (12) au point de voirie (20).

5. Procédé selon l'une quelconque des revendications précédentes, dans lequel les puissances de réception du signal GNSS émis par le brouilleur (14) et du signal GNSS émis par au moins un satellite sont déterminées pour déterminer la présence d'un brouilleur (14) de la source d'interférence (12) au point de voirie (20).

6. Procédé selon l'une quelconque des revendications précédentes, dans lequel le point de voirie (20) servant à la mise en place de l'unité de détection (21) est sélectionné parmi un ou plusieurs des points suivants : zones frontalières, péages routiers, entrées et/ou sorties de zones circonscrites, notamment de places de stationnement et/ou de parkings, entrées et/ou sorties de voie rapide, entrées et/ou sorties d'autoroute, intersections routières, ports ou gares ferroviaires.

7. Procédé selon l'une quelconque des revendications précédentes, dans lequel les informations fournies par le point de voirie (20) comprennent en outre l'heure de détection de la source d'interférence (12).

8. Procédé selon l'une quelconque des revendications précédentes, dans lequel une information de véhicule permettant d'identifier le véhicule automobile (10) est déterminée au point de voirie (20), ladite information étant intégrée comme élément dans les informations produites par le point de voirie (20).

9. Procédé selon l'une quelconque des revendications précédentes, dans lequel les informations produites par le point de voirie (20) sont transmises à un point central.

10. Système de détection de position d'un récepteur GNSS (11) installé dans un véhicule automobile (10), dont le fonctionnement normal est perturbé intentionnellement par une source d'interférence (12) placée dans le véhicule automobile (10), dans lequel :
- une unité de détection (21) respective est placée en des points de voirie (20) prédéfinis, ladite unité de détection (21) étant conçue pour détecter, lors du passage du véhicule automobile (10) par un des points de voirie, un signal d'interférence émis par la source d'interférence (12) et/ou un signal de réception (530) du récepteur GNSS (11) émis par un satellite GNSS (30) et perturbé par la source d'interférence (12) ;
- une unité de calcul est prévue pour traiter les signaux détectés pour établir la présence de la source d'interférence (12) dans le véhicule automobile (10) ; et
- en présence de la source d'interférence (12), une information peut être produite signalant au moins l'emplacement du point de voirie (20) et la source d'interférence (12) placée dans le véhicule automobile (10), la position du véhicule automobile (10) étant déterminée à partir de l'emplacement du point de voirie (20).

11. Système selon la revendication 10, comprenant des moyens supplémentaires de mise en oeuvre du procédé selon l'une quelconque des revendications 2 à 9.
